(19) Europäisches Patentamt
European Patent Office
Office européen des brevets

(11) **EP 4 553 785 A1**

(12) **EUROPEAN PATENT APPLICATION**

(43) Date of publication:
**14.05.2025 Bulletin 2025/20**

(21) Application number: **23209113.2**

(22) Date of filing: **10.11.2023**

(51) International Patent Classification (IPC):
**G06V 10/774** (2022.01)      **G06V 10/776** (2022.01)
**G06V 20/13** (2022.01)

(52) Cooperative Patent Classification (CPC):
**G06V 10/776; G06V 10/774; G06V 20/13**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Helsing GmbH**
**81671 Munich (DE)**

(72) Inventor: **ALMALIOGLU, Yasin**
**81671 Munich (DE)**

(74) Representative: **Rummler, Felix**
**Maucher Jenkins**
**Liebigstraße 39**
**80538 München (DE)**

Remarks:
Amended claims in accordance with Rule 137(2)
EPC.

(54) **TRAINING A MACHINE LEARNING MODEL FOR OBJECT DETECTION**

(57)     A computer-implemented method of training a machine learning model, in particular for detecting locations of objects on images, the method comprising: determining a training data set comprising training samples that include input data and ground truth data, during a first epoch, training the model on a first subset of the training samples to predict the ground truth data, determining a performance measure indicative of a performance of the model after the first epoch operating on a validation data set, determining a second subset of training samples based on the performance measure, during a second epoch, training the model on the second subset of the training samples to predict the ground truth data.

Fig. 1

## Description

## Technical Field

The present disclosure relates to systems, computer-implemented methods, and computer program products for training a machine learning model, in particular for detecting locations of objects on images. The method is applicable in the fields of signal processing, sensor fusion, and image processing.

## Background

A frequent problem in training machine learning model is that available training data are often highly imbalanced. For example, when training a model on real world data, only imbalanced data may be available. This makes training inefficient and computationally expensive.

There is a need for systems and methods that overcome these shortcomings.

## Summary

Disclosed and claimed herein are systems, methods, and computer program products for training a machine learning model.

A first aspect of the present disclosure relates to a computer-implemented method of training a machine learning model. The model is in particular applicable for detecting locations of objects on images. The method comprises the following steps:

- determining a training data set comprising training samples that include input data and ground truth data,
- during a first epoch, training the model on a first subset of the training samples to predict the ground truth data,
- determining a performance measure indicative of a performance of the model after the first epoch operating on a validation data set,
- determining a second subset of training samples based on the performance measure,
- during a second epoch, training the model on the second subset of the training samples to predict the ground truth data.

The method has the effect of using some samples for training during an earlier epoch, and others during a later epoch, depending on the performance on past samples. This allows tailoring the training samples to the different stages of training. Since the choice of the training samples included in the second subset is based on the performance measure, the training process is steered in function of the progress during the training process. The method may be iteratively applied during a training process comprising a plurality of epochs, and apply training data subsets that are change in a controlled way as training progresses.

In an embodiment, the validation data set is disjunct from the training data set. This allows using a validation data set that specifically selected for measuring the performance of the model.

In another embodiment, the training dataset includes a first training class comprising minority class samples and a second training class comprising majority class samples, wherein the first training class has a lower cardinality than the second training class. This method allows training even if the training data are highly imbalanced. For example, the first subset in the first epoch may be highly imbalanced and the second subset may be less imbalanced so that the model learns processing training data with different levels of imbalance during different stages of training.

In yet another embodiment, the first subset of the training samples includes a higher proportion of minority class samples than the second subset. This is advantageous if the model initially trains better on the training samples with the higher proportion of minority class samples, and at later epochs, a lower proportion.

In a further embodiment, determining the second subset of training samples is based on a weighted sum of a predetermined sampling scheduler function and a sampling regularizer function. The scheduler function may represent a change of the distribution of the majority and minority classes over the training epochs, as training progresses. Using a weighted sum of a predetermined and a performance-dependent function allows controlling the training data subsets depending on performance without too much instability due to fluctuations in performance.

In another embodiment, the performance measure includes a number of false positives and/or false negatives. This is a useful performance measure for a model that has the task of predicting the presence of a pattern in input data.

In yet another embodiment, the performance measure includes one or more of a mean average precision, F score, and/or area-under-curve metric, preferably an area-under-curve for precision-recall. The mean average precision incorporates the trade-off between precision and recall and considers both false positives and false negatives and is therefore suitable for most detection applications. The F1 metric is preferable where precision and recall give the highest F1 score. The Area under curve metric covers the area underneath a precision-recall curve. The Area Under Curve for precision-recall curve summarizes the precision recall values for different confidence thresholds under a single metric.

In yet a further embodiment, training the model during the second epoch includes application of a weighted loss function giving different weights to majority and minority classes. Thereby, the loss function is adapted to the training data subset.

In yet another embodiment, the weights for each class depend on, and grow preferably monotonically with, a cardinality of the corresponding class. This allows faster training convergence.

In yet a further embodiment, the input data include images, and the ground truth data include locations of objects on the images.

In yet another embodiment, the images include Synthetic Aperture Radar (SAR) images and/or satellite images. A common problem when training an image processing model on a training dataset of SAR images is the high imbalance, e.g. the presence of only a few images showing a particular object. Applying the method to these data allows efficiently training a model on these data.

A second aspect of the present disclosure relates to a system comprising one or more processors and one or more storage devices, wherein the system is configured to perform the computer-implemented method of the first aspect.

A third aspect of the present disclosure relates to a computer program product for loading into a memory of the system. The computer program comprises instructions, that, when executed by a processor of the system, cause the system to execute a method of the first aspect of the present disclosure.

In an embodiment, a non-transitory computer-readable storage medium is provided that stores instructions executable by one or more processors for clustering one or more electromagnetic emitter signals. The instructions comprise any of the steps of a method of the first and/or second aspect of the present disclosure.

A fourth aspect of the present disclosure relates to a computer program product comprising a trained machine learning module obtainable by the method of the first aspect of the present disclosure. In an embodiment, a non-transitory computer-readable storage medium is provided that stores the trained machine learning module.

All properties and embodiments that apply to the first aspect also apply to the second aspect.

## Brief description of the drawings

The features, objects, and advantages of the present disclosure will become more apparent from the detailed description set forth below when taken in conjunction with the drawings in which like reference numerals refer to similar elements.

- Figure 1 shows a flow chart of a computer-implemented method of training a machine learning model.
- Figure 2 shows a block diagram of data structures.
- Figure 3 shows a block diagram of a sample contained in a data set.
- Figure 4 shows a block diagram of a system.
- Figure 5 shows a block diagram of computer program products.

- Figure 6 shows a graph indicating normalized sampling distributions depending on training epochs for a first example.
- Figure 7 shows a graph indicating normalized sampling distributions depending on training epochs for a second example.

## Detailed description of the preferred embodiments

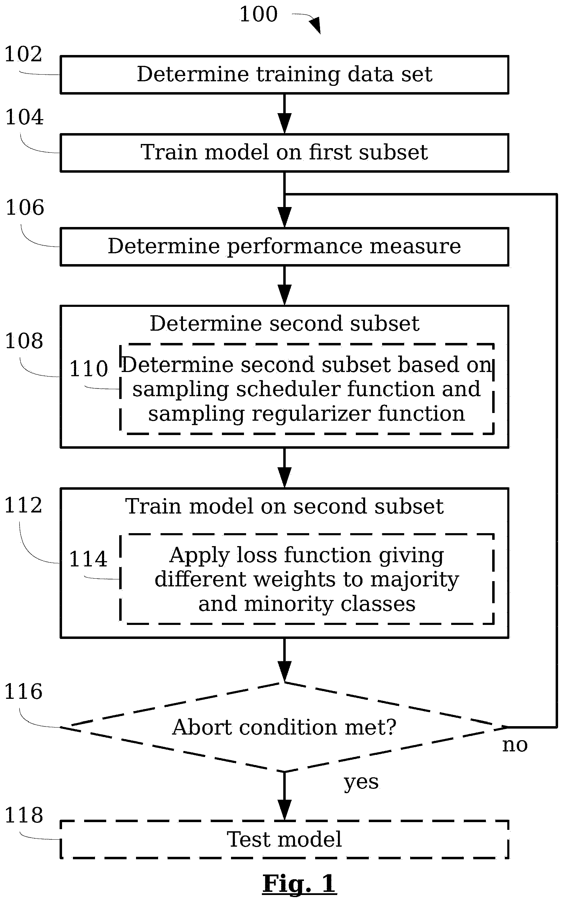

Figure 1 shows a flow chart of a computer-implemented method 100 of training a machine learning model.

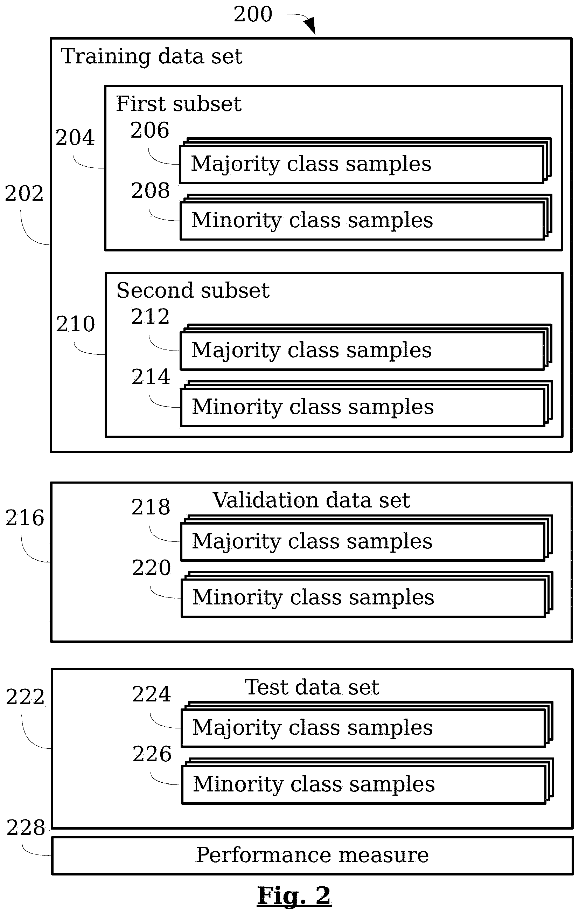

The computer-implemented method 100 begins by determining, 100, a training data set comprising input data and ground truth data. For example, the training data set 202 as described relative to Figure 2 can be used. Then, the training begins. The training process involves a plurality of epochs, which are indexed by the epoch number t. In the present embodiment, an iterative process is conducted that may include a large number of epochs. However, the basic principle of the present disclosure works for a lower number of epochs, even if only two epochs are conducted. The model is then trained, 104, on a first subset 204 of the data during a first epoch. The training may include setting weights of the model in order to enable the model to predict the ground truth data, and to allow it to generalize to make predictions on similar data sets.

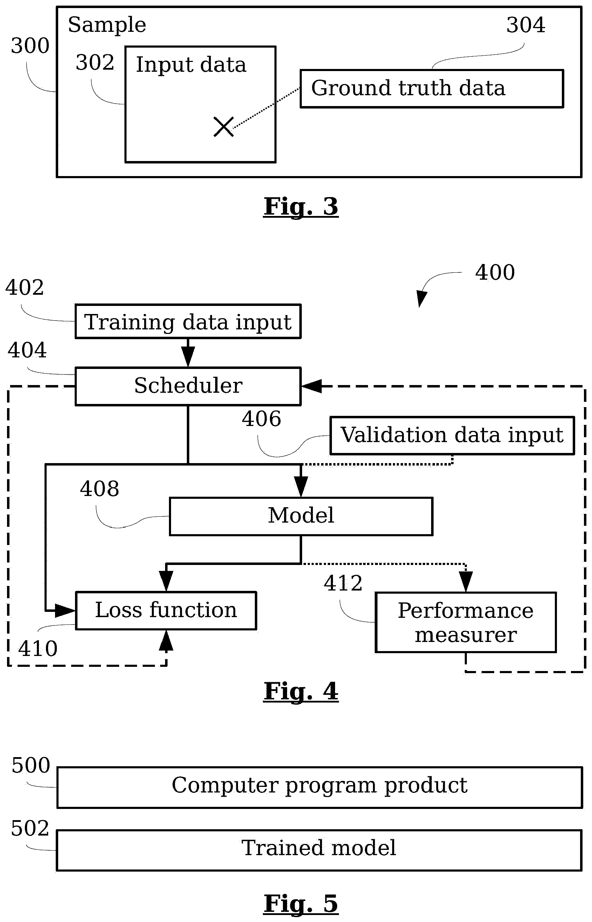

At 106, a performance measure is determined. To do so, the model processes input data of a validation data set, such as validation data set 216, to determine a prediction. By comparing the prediction to ground truth data included in the validation data set, a performance measure is determined. The performance measure may include a number of false positives or false negatives, or other performance measures 400 as explained with respect to Figure 4.

Depending on the performance measure, a second training data subset 210 is determined, 108. In general, the second training data subset 210 comprises different samples than the first training data subset. The determination of the second training data subset 210 depends at least in part on the performance measure. In the present embodiment, this effect is achieved by defining a target distribution as follows.

For a training data set comprising classes numbered by index $i = 1 \ldots K$, wherein $K$ is the number of classes, we can define $C_i$ be the cardinality of a set of samples belonging to class $i$. We introduce the vector $\boldsymbol{d}$ to represent the class distribution. For each attribute, the $i$-th element of the data distribution d is defined as

$$d_i = 1 - \frac{C_i}{C_{max}}$$

Here, $C_{max}$ is the size of the majority class. Defining $d_i$ in this way offers a computationally efficient way to prioritize the minority classes in some training epochs. It is preferred to prioritize the minority classes in the early epochs, because this leads to faster convergence of the model training in the early epochs. Therefore, the initial target distribution of an attribute $d_{target}$ (0) in a training subset, also referred to as a batch, is set to the imbalanced value $d_{train}$.

During subsequent epochs of the training process, the target distribution is gradually changed:

$$d_{target}(t) = d_{train}^{\alpha g(t)+(1-\alpha)h(t)}$$

Here, $g(t) \in [0,1]$ is a sampling scheduler function, $h(t) \in [0,1]$ is a sampling regularizer function and $\alpha$ is the sampler weight.

The sampling scheduler function $g(t)$ is a predetermined function and effects a transition from the initial distribution to a final distribution. It is preferred if the initial distribution contains a higher proportion of minority classes, and in the final distribution, the proportion of minority classes is similar to the proportion of minority classes in the training data set. The sampling scheduler function $g(t)$ may include a linear, a cosine, or an exponential function.

The sampling regularizer function $h(t)$ and is dependent on the model performance. The scheduler can monitor the model performance and favour the classes that trigger false detections. This approach leads to faster convergence of the training because the model is trained on the samples that most strongly affect the results. In an example, the sampling regularizer function could be chosen as $h(t) = Rt$, wherein $R$ is a rate of false positives.

The value $\alpha$ is the sampler weight. It specifies the extent to which the scheduling is determined by the performance measure. A lower sampler weight leads to a more adaptive scheduling, but also to higher influence on the scheduling of the fluctuations inherent in performance measures for training. The advantage of a more adaptive scheduling is that by monitoring the performance of the model, the classes in sampling are preferred that trigger false detections. In contrast, a higher sampler weight leads to a less adaptive and more stable training process. In an example, where an object detection model was trained on SAR images, the sampler weight was chosen as $\alpha = 0.8$, which lead to a gradual change in the distribution and eventually training convergence.

The model is then trained, 112, on the second subset 210 that has been determined by applying the target distribution as defined above.

It is preferred to apply, 114, a weighted loss function that gives different weights to majority and minority classes. The weights for each class depend on, and grow preferably monotonic with, a cardinality of the corresponding class. A preferable loss function is

$$\mathcal{L}_{AS} = \frac{1}{N} \sum_{i=1}^{K} \sum_{j=1}^{N_i} w_i \times \mathcal{L}_{det}(x_{i,j}, \bar{y}_{i,j})$$

Here, N is the size of the subset, which could also be referred to as a batch. $N_i$ is the number of samples of the i-th class in the subset. The value $\bar{y}_{i,j}$ is the prediction generated by the model at the first training epoch. The value $x_{i,j}$ is the ground truth. The function $\mathcal{L}_{det}$ is the objective function for the task and can include a cross-entropy. The weight $w_i$ for class i is defined as

$$w_i = \begin{cases} \dfrac{d_{target,i}(t)}{d_{current,i}} & \text{if} \quad \dfrac{d_{target,i}(t)}{d_{current,i}} \geq 1 \\ \{0,1\} & \text{if} \quad \dfrac{d_{target,i}(t)}{d_{current,i}} < 1 \end{cases}$$

Here, $d_{target,i}(t)$ is the target distribution of the i-th class in the second epoch, and $d_{current,i}$ is the target distribution of the i-th class in the first epoch. If $\dfrac{d_{target,i}(t)}{d_{current,i}} < 1$, the $\dfrac{d_{target,i}(t)}{d_{current,i}}$ percentage of the data of the i-th class is sampled with the original weight 1 and the rest with weight 0. Otherwise, the i-th class is a minority class and a larger weight is assigned to the samples.

It is preferred to repeat steps 106-114 iteratively. The iteration includes determining the performance measure of the model during the most recently performed epoch, and determining a training data subset for the for the next epoch. After each iteration, an abort condition is checked. The abort condition is related to whether further changes of the training data subset can be made. For example, when scheduling the training data towards a balanced distribution, the training can come to an end when the distribution is fully balanced. A final test 118 can then give some information on how the model performs on a test data set, such as test data set 222, which can be chosen differently from the training dataset and the validation data set.

Thereby, the method can use all samples of the training data set for training. Scheduling allows determining the time when they are used, depending on the performance. In other words, an adaptive sampling approach is applied to a sampling scheduler. Thereby, some samples are used for training earlier, and others later, depending on a performance measure of the model when operating on past samples. The output produced by the computer-implemented method 100 is a trained machine learning model.

Figure 2 shows a block diagram of data structures 200 used for the training process. The training data set 202, the validation data set 216, and the test data set 222 generally include labelled data. These three data sets preferably include a plurality of samples, each of which includes input data and ground truth data. An embodiment for the structure of each sample is shown in Figure 3. The training data set 202 includes samples of two different identifiable types. For example, a training data set of labelled images may contain images that contain a car and others that do not contain a car. Accordingly, a first class of images can be defined (e.g. images showing a car) as foreground and other images (images that do not show a car) as background. Training data set 202 is imbalanced: The samples having lower cardinality in the training data set 202 are referred to as the minority class samples 208, 214. The samples that have a higher cardinality in the training data set 202 are referred to as the majority class samples 206, 212. For example, images with a car may be the minority class for a given training data set. However, samples of the minority class may form a majority in subset 204 or 210 or data sets 216 or 222 if these data sets are chosen accordingly.

Returning to the training data set 202 of the present embodiment, among its samples, a first subset 204 and a second subset 210 can be chosen. Each subset includes majority class samples 206, 212, and minority class samples 208, 214. In particular, the items included into the second subset 210 can be chosen so that the number of majority class samples 212 in the first subset is lower than the number of minority class subsets 214.

The validation data set 216 also comprises majority class samples 218 and minority class samples 220. The validation data set is disjunct from the training data set. Thereby, a predetermined part of labelled data is reserved for validation purposes. The validation data set is preferably a representative part of the available labelled data. The validation data set 216 preferably includes samples specifically selected for validation purposes.

The test data set 222 also comprises majority class samples 224 and minority class samples 226. The test data set is preferably a representative part of the available labelled data. It can be used to test the trained model after training is completed, e. g. in step 118 of method 100.

The first subset of the training samples preferably includes a higher proportion of minority class samples than the second subset. The model initially trains better on the training samples with the higher proportion of minority class samples, and at later epochs, a lower proportion helps generalizing.

The performance measure 228 indicates a performance of the model after the first epoch operating on a validation data set. The performance measure 228 can include, for example, a number of false positives and/or false negatives.

It can also include a mean are precision (mAP): The mAP incorporates the trade-off between precision and recall and considers both false positives (FP) and false negatives (FN). This property makes mAP a suitable metric for most object detection applications.

The performance measure can also include an F1 metric: It is preferable where precision and recall give the highest F1 score. The F1 score calculates the balance between precision and recall. If the F1 score is high, precision and recall are high, and vice versa.

AUC (Area under curve): It covers the area underneath the precision-recall curve. The Area Under Curve for precision-recall (PR-AUC) curve summarizes the PR values for different confidence thresholds under a single metric.

Figure 3 shows a block diagram of a sample 300 contained in a data set. The sample 300 includes input data 302 and ground truth data 304. In this example, the input data 302 includes an image, such as a satellite image. The ground truth data includes a position of an object on the image.

For example, in a satellite image data set comprising a large number of images of the surface of the earth, only very few may images include images of, e. g., a specific type of vehicle. These images can be referred to as foreground images and form a minority class. In contrast, the images including none of the specified type of vehicle may be referred to as background images and form a majority class. The method 100 is especially well suited for dealing with this kind of data, where the amount of labelled training data is limited and highly imbalanced. In an example the input data comprise Synthetic Aperture Radar (SAR) images.

The Synthetic Aperture Radar is an important technology in various critical applications such as environmental monitoring, disaster management, and military surveillance. Object detection in SAR imagery has applications in target identification, urban monitoring, and disaster response. However, the inherent complexities of SAR data, including speckle noise, geometric distortions, wide radiometric range and complex scattering mechanisms, pose significant challenges for accurate object detection. A major problem for training object detection models on SAR imagery is the fact that the objects to be detected (foreground objects) are relatively small compared to size of the SAR image data (which can represent multiple $km^2$ of the earth's surface). The number of foreground objects is thus relatively small compared to the number of "background objects" (objects, that are not to be detected). When training a model on SAR imagery data to detect (labelled) objects, the distribution between foreground objects and background objects can therefore be highly imbalanced. Consequently, existing SAR object detection methods often struggle to achieve satisfactory performance due to the lack of sufficient balanced class representation.

Also, SAR images show small objects, but have a high noise level. Moreover, SAR data tend to include features caused by highly reflective objects, such as retroreflectors. Those features are difficult to process by known models and can introduce false positives. Training by method 100 allows providing a model that is less prone to mistake such features for objects. Furthermore, the method 100 was tested on SAR images and it was shown that this lead to an increase in precision, so that the detections of locations of objects on the SAR images are more accurate and reliable compared to training without adaptive scheduling. Finally, by increased training convergence, the training can be completed with fewer computational steps and therefore also saves energy of a system carrying out the training.

Figure 4 shows a block diagram of a system 400 that comprises a training data input unit 402 that receives a training data set. The scheduler 404 selects, subsets of the training data set depending on the epoch. For a training epoch, the model processes the input data of the training data subset, and the output data are processed by a loss function (solid lines). After a training epoch, the model 408 processes the validation data from the validation data input 406 and is evaluated by the performance measurer 412. The performance measurer sends a control signal (dashed line) to the scheduler 404, which adapts the scheduling for the next training epoch according to the performance. The scheduler 404 also sends a control signal (dashed line) to the loss function 410 to adapt the loss determination to the modified training data subset.

Figure 5 shows a block diagram of computer program products. A computer program product 500 is shown. The computer program product 500 is suitable for loading into a memory of a computer. It comprises instructions, that, when executed by a processor of the computer, cause the computer to execute the computer-implemented method 100.

Furthermore, a computer program product 502 is shown. The computer program product comprises a trained machine learning module obtainable by the computer-implemented method 100.

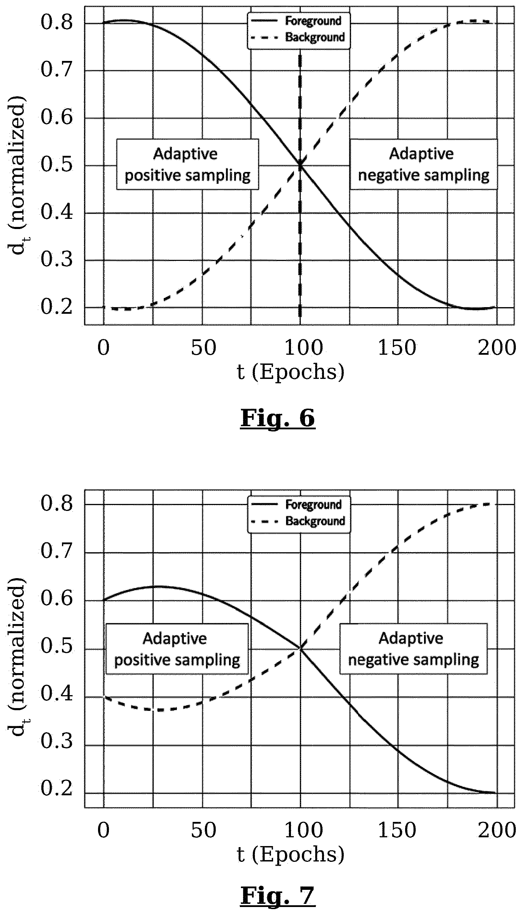

Figure 6 shows a graph indicating normalized sampling distributions depending on training epochs for a first example. In this example, an iteration over 200 training epochs is shown. In early epochs, mostly foreground samples included into the epoch's training data subsets. These samples are minority samples. This allows constant and comparably fast improvement in precision. During later epochs, more background samples, i.e. minority samples, are included. This further improves precision, because the model is already trained and can therefore process more background samples, which otherwise would lead to more false positives.

Figure 7 shows a graph indicating normalized sampling distributions depending on training epochs for a second example. This example is similar to the example of Figure 6, but differs in that the precision does not improve after 100 epochs. The scheduler reacts to this by strongly increasing the inclusion of background samples at 100 epochs.

**Reference signs**

| | |
|---|---|
| 100 | Computer-implemented method of training a machine learning model |
| 102-118 | Steps of method 100 |
| 200 | Data sets |
| 202 | Training data set |
| 204 | First subset |
| 206 | Majority class samples |
| 208 | Minority class samples |
| 210 | Second subset |
| 212 | Majority class samples |
| 214 | Minority class samples |
| 216 | Validation data set |
| 218 | Majority class samples |
| 220 | Minority class samples |
| 222 | Test data set |
| 224 | Majority class samples |
| 226 | Minority class samples |
| 228 | Performance measure |
| 300 | Sample |
| 302 | Input data |
| 304 | Ground truth data |
| 400 | System |
| 402 | Training data input unit |
| 404 | Scheduler |
| 406 | Validation data input unit |
| 408 | Model |
| 410 | Loss function |
| 412 | Performance measurer |
| 500 | Computer program product |
| 502 | Computer program product including trained model |

**Claims**

1. A computer-implemented method of training a machine learning model, in particular for detecting locations of objects on images, the method comprising:

   determining a training data set (202) comprising training samples that include input data (302) and ground truth data (304),
   during a first epoch, training the model (408) on a first subset (204) of the training samples to predict the ground truth data (304),
   determining a performance measure (228) indicative of a performance of the model after the first epoch operating on a validation data set (216),
   determining a second subset (210) of training samples based on the performance measure (228),
   during a second epoch, training the model (408) on the second subset (210) of the training samples to predict the ground truth data (304).

**2.** The computer-implemented method of claim 1, wherein the validation data set (216) is disjunct from the training data set (202).

**3.** The computer-implemented method of any of the preceding claims,
wherein the training dataset includes a first training class comprising minority class samples (208, 214) and a second training class comprising majority class samples (206, 212), wherein the first training class has a lower cardinality than the second training class.

**4.** The computer-implemented method of claim 3, wherein the first subset (204) of the training samples includes a higher proportion of minority class samples (208, 214) than the second subset (210).

**5.** The computer-implemented method of any of the preceding claims,
wherein determining the second subset (210) of training samples is based on a weighted sum of a predetermined sampling scheduler function and a sampling regularizer function, wherein the sampling regularizer function depends on the performance measure (228).

**6.** The computer-implemented method of any of the preceding claims,
wherein the performance measure (228) includes a number of false positives and/or false negatives.

**7.** The computer-implemented method of any of the preceding claims,
wherein the performance measure (228) includes one or more of an mean average precision, F score, and/or area-under-curve metric, preferably an area-under-curve for precision-recall.

**8.** The computer-implemented method of any of the preceding claims,
wherein training the model (408) during the second epoch includes application of a weighted loss function (410) giving different weights to majority class samples (206, 212) and minority class samples (208, 214).

**9.** The computer-implemented method of any claim 8, wherein the weights for each class depend on, and grow preferably monotonically with, a cardinality of the corresponding class.

**10.** The computer-implemented method of any of the preceding claims,
wherein the input data (302) include images, and the ground truth data (304) include locations of objects on the images.

**11.** The computer-implemented method of claim 10, wherein the images include Synthetic Aperture Radar images and/or satellite images.

**12.** A system (400) comprising one or more processors and one or more storage devices,
wherein the system (400) is configured to perform the computer-implemented method of any one of claims 1-11.

**13.** A computer program product (500) for loading into a memory of a computer, comprising instructions, that, when executed by a processor of the computer, cause the computer to execute a computer-implemented method of any of claims 1-11.

**14.** A computer program product (502) comprising a trained machine learning module obtainable by the computer-implemented method of any of claims 1-11.

**Amended claims in accordance with Rule 137(2) EPC.**

**1.** A computer-implemented method of training a machine learning model, for detecting locations of objects on images, the method comprising:

determining a training data set (202) comprising training samples that include input data (302) and ground truth data (304), wherein the training dataset includes a first training class comprising minority class samples (208, 214) and a second training class comprising majority class samples (206, 212), wherein the first training class has a lower cardinality than the second training class;
during a first epoch, training the model (408) on a first subset (204) of the training samples to predict the ground truth data (304);
determining a performance measure (228) indicative of a performance of the model after the first epoch operating on a validation data set (216);
determining a second subset (210) of training samples based on the performance measure (228); and
during a second epoch, training the model (408) on the second subset (210) of the training samples to predict the ground truth data (304).

**2.** The computer-implemented method of claim 1, wherein the validation data set (216) is disjunct from the training data set (202).

**3.** The computer-implemented method of claim 2, wherein the first subset (204) of the training samples includes a higher proportion of minority class samples (208, 214) than the second subset (210).

**4.** The computer-implemented method of any of the preceding claims, wherein determining the second subset (210) of training samples is based on a weighted sum of a predetermined sampling scheduler function and a sampling regularizer function, wherein the sampling regularizer function depends on the performance measure (228).

**5.** The computer-implemented method of any of the preceding claims, wherein the performance measure (228) includes a number of false positives and/or false negatives.

**6.** The computer-implemented method of any of the preceding claims, wherein the performance measure (228) includes one or more of an mean average precision, F score, and/or area-under-curve metric, preferably an area-under-curve for precision-recall.

**7.** The computer-implemented method of any of the preceding claims, wherein training the model (408) during the second epoch includes application of a weighted loss function (410) giving different weights to majority class samples (206, 212) and minority class samples (208, 214).

**8.** The computer-implemented method of any claim 7, wherein the weights for each class depend on, and grow preferably monotonically with, a cardinality of the corresponding class.

**9.** The computer-implemented method of any of the preceding claims, wherein the input data (302) include images, and the ground truth data (304) include locations of objects on the images.

**10.** The computer-implemented method of claim 9, wherein the images include Synthetic Aperture Radar images and/or satellite images.

**11.** A system (400) comprising one or more processors and one or more storage devices, wherein the system (400) is configured to perform the computer-implemented method of any one of claims 1-10.

**12.** A computer program product (500) for loading into a memory of a computer, comprising instructions, that, when executed by a processor of the computer, cause the computer to execute a computer-implemented method of any of claims 1-10.

**13.** A computer program product (502) comprising a trained machine learning module obtainable by the computer-implemented method of any of claims 1-10.

**Fig. 1**

200

**Training data set** (202)

**First subset** (204)
206 — Majority class samples
208 — Minority class samples

**Second subset** (210)
212 — Majority class samples
214 — Minority class samples

**Validation data set** (216)
218 — Majority class samples
220 — Minority class samples

**Test data set** (222)
224 — Majority class samples
226 — Minority class samples

228 — Performance measure

**Fig. 2**

300 Sample 304

302 Input data

Ground truth data

X

**Fig. 3**

400

402 Training data input

404 Scheduler

406 Validation data input

408 Model

Loss function

410

412 Performance measurer

**Fig. 4**

500 Computer program product

502 Trained model

**Fig. 5**

**Fig. 6**

**Fig. 7**

Europäisches
Patentamt

European
Patent Office

Office européen
des brevets

# EUROPEAN SEARCH REPORT

**Application Number**

EP 23 20 9113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIRU WANG ET AL: "Dynamic Curriculum Learning for Imbalanced Data Classification", ARXIV.ORG, CORNELL UNIVERSITY LIBRARY, 201 OLIN LIBRARY CORNELL UNIVERSITY ITHACA, NY 14853, 21 January 2019 (2019-01-21), XP081006105, * the whole document * | 1-14 | INV. G06V10/774 G06V10/776 G06V20/13 |

-----

**TECHNICAL FIELDS SEARCHED (IPC)**

G06V

The present search report has been drawn up for all claims

| Place of search | Date of completion of the search | Examiner |
|---|---|---|
| The Hague | 1 March 2024 | Nowbakht Irani, Ali |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)